# FASCICULE DE BREVET EUROPEEN

(11) **EP 1 414 538 B1**
(45) Date de publication et mention de la délivrance du brevet: **25.07.2007**
(21) Numéro de dépôt: 02770054.1
(22) Date de dépôt: 24.07.2002
(51) Int. Cl.: B01D 53/94, B01D 53/02

(54) **PROCÉDÉ POUR L' ÉLIMINATION DES OXYDES D'AZOTE**
VERFAHREN ZUR BESEITIGUNG VON STICKOXIDEN
PROCESS FOR ELIMINATING NITROGEN OXIDES

(30) Priorité: 25.07.2001 FR 0110046
(43) Date de publication de la demande: 06.05.2004
(73) Titulaire: Institut Français du Pétrole, 92852 Rueil-Malmaison Cedex (FR)
(72) Inventeur: BECUE, Thierry, F-75006 Paris (FR); VILLERET, Philippe, F-92500 Rueil Malmaison (FR)
(86) Numéro de dépôt international: PCT/FR2002/002642
(87) Numéro de publication internationale: WO 2003/009918

(56) Documents cités:
- EP-A- 0 771 584
- EP-A- 0 787 522
- EP-A- 0 862 941
- EP-A- 1 064 998
- EP-A- 1 099 467
- US-A- 5 300 472

## Description

### Domaine technique

La présente invention concerne le domaine des procédés qui favorisent l'élimination par adsorption des oxydes d'azote (NO et NO₂, couramment appelés NOₓ) présents dans un mélange gazeux pouvant être sur-stoechiométrique en composés oxydants et plus particulièrement en oxygène, et qui utilisent des matériaux qui ne sont pas empoisonnés par les produits soufrés présents dans ces gaz. L'invention s'applique à l'élimination des oxydes d'azote (NOₓ) présents dans les gaz d'échappement de moteurs de véhicules automobiles et tout particulièrement de véhicules fonctionnant avec du diesel.

### Etat de la technique antérieure

La forte toxicité des oxydes d'azote, leur rôle dans la formation des pluies acides et de l'ozone troposphérique ont conduit à la mise en place de normes sévères limitant les rejets de ces composés. Pour satisfaire ces normes il est généralement nécessaire d'éliminer au moins une partie de ces oxydes présents dans les gaz d'échappement des moteurs automobiles ou stationnaires et des turbines.

L'élimination des oxydes d'azote par décomposition thermique ou de préférence catalytique est envisageable mais les hautes températures exigées par cette réaction sont incompatibles avec celles des gaz d'échappement. Seule la réduction catalytique des oxydes d'azote en azote est réalisable en utilisant les réducteurs présents, mais en faible quantité, dans le gaz d'échappement (CO, H₂, hydrocarbures imbrûlés ou dont la combustion a été imparfaite dans le moteur), et également en injectant, en amont du catalyseur, un complément de composés réducteurs. Ces agents de réduction sont des hydrocarbures, des alcools, des éthers ou autres composés oxygénés; ils peuvent être également le carburant liquide ou gazeux (sous pression "GNC" ou liquéfié "GPL") alimentant le moteur ou la turbine.

La demande de brevet EP 0 540 280 A1 décrit un dispositif pour réduire l'émission des oxydes d'azote dans les gaz d'échappement de moteurs à combustion interne, qui comprend un matériau pour l'adsorption et la désorption des oxydes d'azote. Selon ce procédé, les oxydes d'azote sont emmagasinés, au cours du fonctionnement en régime pauvre du moteur, c'est à dire pauvre en hydrocarbures, sous la forme de nitrates. Mais la capacité de stockage d'un piège fonctionnant selon ce principe est généralement détériorée par l'adsorption de produits soufrés, contenus dans les gaz d'échappement et qui forment des sulfates plus stables que les nitrates, empoisonnant le piège.

Par ailleurs, suite au piégeage des NOₓ, il est nécessaire de procéder à une étape de désorption des oxydes d'azote suivie de leur réduction. On connaît des dispositifs de traitement par oxydation catalysée du monoxyde de carbone CO et des hydrocarbures HC contenus dans les gaz d'échappement, faisant appel, par exemple à des catalyseurs de réduction des oxydes d'azote, appelés catalyseurs DeNOₓ, qui sont actifs pour réaliser la réduction des NOₓ dans des plages de température comprises entre 200 et 350°C comprenant par exemple des métaux précieux sur des supports en oxyde, tels que du platine ou du palladium déposé sur un support en alumine, en oxyde de titane ou de zirconium ou par des pérovskites ou à des plages de température comprises entre 350 et 600°C comprenant par exemple des zéolithes hydrothermiquement stables (par exemple Cu-ZSM5). Un dispositif de traitement des gaz d'échappement d'un moteur à allumage par compression comportant un catalyseur et un adsorbant d'oxydes d'azote placés dans le collecteur d'échappement est décrit par exemple dans les demandes de brevets EP 0 540 280 A1 et EP 0 718 478 A1.

Il est donc nécessaire que le matériau se comportant comme un piège pour les oxydes d'azote soit capable d'adsorber les oxydes d'azote aux basses températures, jusqu'à la température nécessaire pour le fonctionnement du catalyseur de réduction des NOₓ, le piège assurant alors la désorption des oxydes d'azote qui viennent au contact du catalyseur DeNOX à une température suffisante pour assurer l'amorçage de la réaction de réduction des NOₓ.

Dans la demande de brevet EP-A2-1 055 806, il est décrit un procédé combinant l'utilisation d'un piège à NOx avec le système d'un filtre à particules

Dans le brevet FR 2 733 924, il est fait état d'un matériau de formule YBa₂Cu₃O₇₋ₓ qui permet d'intégrer les oxydes d'azote dans l'oxyde mixte composant le matériau. Ce brevet indique que le matériau, après avoir été chargé d'oxydes d'azote, se transforme en passant d'une structure orthorhombique riche en oxygène en une structure tétragonale pauvre en oxygène quand la teneur en oxygène du gaz diminue, et que cette transition de phase provoque la désorption des oxydes d'azote. Selon ce procédé, il est alors possible d'influencer l'adsorption et la désorption des oxydes d'azote en faisant varier les teneurs en oxygène des gaz d'échappement. II a été récemment montré (K-Y. Lee, K. Watanabe, M. Misono, Applied Catalysis B 13, 241 (1997)) que l'adsorption de NOₓ en présence d'oxygène sur ce matériau YBa₂Cu₃O₇₋ₓ conduit en fait à la formation d'espèces nitrates de baryum (Ba(NO₃)₂). Cette même étude montre aussi que ce matériau perd ses propriétés d'adsorption des oxydes d'azote en présence de dioxyde de carbone par formation de carbonates de baryum. Les espèces de sulfates de baryum étant plus stables que les espèces nitrates, il est à craindre qu'un composé du type YBa₂Cu₃O₇₋ₓ s'empoisonne aussi en présence de dioxyde de soufre en formant des espèces sulfates sur les sites d'adsorption des oxydes d'azote.

Il est également connu de la demande de brevet EP-A-1.099.467 un procédé pour l'élimination des oxydes d'azote en présence d'un matériau comprenant des octaèdres MO₆ (M étant un élément des groupes IIIB, IVB, VB, VIB, VIIB, VIII, IB, IIB, IIIA) et au moins un élément B choisi parmi les éléments alcalins, alcalino-terreux, les terres rares, les métaux de transition, les éléments des groupes IIIA, IVA. Le matériau décrit dans ce document d'art antérieur présente une structure caractéristique qui génère des canaux, ledit élément B se trouvant généralement dans les canaux de la structure oxyde.

Les matériaux qui sont utilisés dans le procédé faisant l'objet de ce brevet peuvent se trouver à l'état naturel ou peuvent être synthétisés en laboratoire.

### Résumé de l'invention

L'invention concerne des matériaux qui sont utilisés dans un procédé pour l'élimination des oxydes d'azote NO et NO₂ (NOₓ), en particulier présents dans des gaz d'échappement, par exemple de moteurs à combustion interne de véhicules automobiles fonctionnant en milieu sur-stoechiométrique en oxydants, lesdits matériaux pouvant adsorber les NOₓ et pouvant désorber les NOₓ par élévation de la température ou par traitement avec un mélange riche en réducteurs. Les matériaux sont des oxydes mixtes dont la charpente est constituée de cations métalliques M entourés chacun de 6 atomes d'oxygène et dont les octaèdres (MO₆) ainsi formés reliés entre eux par les arêtes et les sommets génèrent une structure qui présente des feuillets entre lesquels les oxydes d'azote peuvent s'insérer.

### Intérêt de l'invention

Le matériau utilisé dans le procédé selon l'invention qui présente une structure en feuillets permet de piéger les oxydes d'azote aux basses températures et de les désorber à la température à laquelle un catalyseur DeNOx est capable de les réduire. Ces matériaux sont insensibles aux oxydes de soufre et de carbone contenus dans les gaz d'échappement, ce qui évite l'empoisonnement desdits matériaux. Les matériaux utilisés dans le procédé selon l'invention réalisent l'adsorption des oxydes d'azote dans une large gamme de température, alors que la désorption s'effectue dans une fenêtre de température très étroite permettant une gestion aisée de la régénération thermique. Lors de la désorption, les oxydes d'azote préalablement adsorbés sont émis par bouffées de forte concentration en NOₓ, ce qui est bénéfique pour la cinétique de réaction de réduction des oxydes d'azote désorbés. La cinétique de réduction des NOₓ par des hydrocarbures est en effet d'ordre positif par rapport aux espèces oxydes d'azote. Le dit matériau ne présente pas de phase oxyde basique qui stabilise fortement les oxydes d'azote et les oxydes de soufre respectivement sous formes de nitrates et de sulfates. Les SOₓ qui peuvent être insérés avec les NOₓ dans la structure du matériau utilisé dans le procédé faisant l'objet de l'invention sont désorbés dans une gamme de température similaire à celle des NOₓ. L'empêchement de la formation de sulfates stables assure un empoisonnement moindre du matériau adsorbant, une fréquence et une température de régénération moins élevée, donc une durée de vie accrue du piège à NOₓ et un gain énergétique.

Le matériau utilisé dans le procédé selon la présente invention permet également une désorption chimique par variation de la composition chimique des gaz des oxydes d'azote. Selon une mise en oeuvre particulière de l'invention, l'association des matériaux utilisés dans le procédé selon la présente invention avec un métal du groupe VIII permet l'élimination des NOₓ adsorbés par réduction lors du passage en milieu riche.

### Exposé de l'invention

La présente invention concerne un procédé d'élimination des oxydes d'azote dans des gaz d'échappement en particulier de moteurs à combustion interne de véhicules automobiles réalisé en présence d'un matériau réalisant l'adsorption et la désorption des oxydes d'azote dont la structure est composée d'octaèdres (MO₆), M étant choisi parmi les éléments des groupes IIIB à IVA de la classification périodique des éléments ou le mélange d'au moins deux de ces éléments. De préférence cet élément (M) est à un degré d'oxydation moyen proche de 4. Le matériau utilisé dans le procédé revendiqué présente une structure caractéristique lamellaire dans laquelle les NOₓ peuvent s'insérer aux basses températures et en sortir à plus haute température. Les feuillets de ces matériaux sont formés par l'enchaînement bidimensionnel des octaèdres (MO₆) qui se lient entre eux par les arêtes. Ce type de matériaux est connu sous l'acronyme OL signifiant Octahedral Layer (structure lamellaire composée d'octaèdres). Le matériau utilisé dans le procédé selon l'invention est un matériau cristallin présentant une structure bidimensionnelle.

La phase adsorbante du matériau utilisé dans le procédé selon l'invention a une structure lamellaire et est composée d'octaèdres (MO₆). Elle comprend :
- au moins un élément (M) choisi dans le groupe constitué par les éléments des groupes IIIB, IVB, VB, VIB, VIIB, VIII, IB, IIB, IIIA et IVA de la classification périodique des éléments ou le mélange d'au moins deux de ces éléments, chaque élément M étant en coordinence avec 6 atomes d'oxygène, et se situant au centre des octaèdres d'oxygène,
- au moins un élément (B) choisi dans le groupe constitué par les éléments alcalins IA, alcalino-terreux IIA, terres rares IIIB, métaux de transition ou les éléments des groupes IIIA et IVA, l'élément B se situant généralement dans l'espace entre les feuillets.
Dans une mise en oeuvre de l'invention, le matériau comprend éventuellement au moins un métal (C) choisi dans le groupe des métaux précieux de la famille du platine (groupe VIII).
Cette mise en oeuvre permet de réaliser la réduction des NOₓ subséquemment lors de l'adsorption puis de la désorption. Le matériau utilisé dans le procédé selon l'invention réalise donc de manière surprenante les trois étapes sur un seul matériau.

Les éléments M sont choisis parmi le scandium, l'yttrium, le lanthane, le titane, le zirconium, l'hafnium, le vanadium, le niobium, le tantale, le chrome, le molybdène, le tungstène, le manganèse, le rhénium, le fer, le cobalt, le nickel, le cuivre, l'argent, l'or, le zinc, le cadmium, le gallium, l'aluminium, l'indium, le silicium, le germanium, l'étain.
La moyenne des charges (degré d'oxydation) portées par le ou les cations M appartenant aux groupes IIIB à IVA est de préférence d'environ +4. Au moins la majeure partie des éléments (M) est de préférence choisie parmi le manganèse, le titane, l'étain, le tungstène, le zirconium, le molybdène, le chrome, le niobium, le vanadium ou le mélange d'au moins deux de ces éléments et de manière préférée le manganèse, le titane, le zirconium et l'étain. D'autres éléments M des groupes IIIB à IVA peuvent être ajoutés en quantité minoritaire comme dopants. De préférence, les éléments des groupes IIIB à IVA ajoutés en quantité minoritaire sont choisis parmi l'aluminium, le zinc, le cuivre, le nickel, le cobalt, le fer, le chrome, le scandium, l'yttrium, le gallium, le cadmium et l'indium, et de manière encore plus préférée choisis parmi l'aluminium, le zinc, le cadmium, le scandium, l'yttrium et le gallium.

Les éléments (B) appartiennent au groupe des éléments alcalins IA, alcaüno-terreux IIA, terres rares IIIB, métaux de transition ou les éléments des groupes IIIA et IVA. Ils se situent dans les espaces inter-lamellaires du matériau. De préférence on choisit un métal alcalin ou alcalino-terreux par exemple le potassium, le rubidium, le magnésium, le baryum ou le strontium.

Les éléments (C) appartiennent au groupe des métaux précieux du groupe VIII de la classification périodique des éléments, c'est-à-dire appartiennent au groupe formé par le platine, le palladium, le rhodium, le ruthénium, l'iridium, et l'osmium. De préférence l'élément (C) est soit le platine, soit un mélange de platine et de rhodium, de palladium et de rhodium, soit encore un mélange de platine, de rhodium et de palladium. Cette mise en oeuvre de l'invention comprenant au moins un élément (C) choisi parmi les métaux précieux du groupe VIII permet d'oxyder NO en NO₂.

La phase adsorbante du matériau utilisé dans le procédé selon l'invention a la composition massique, exprimée en pour cent masse par rapport à la masse totale de cette phase active, calcinée à 1000°C pendant 4h, suivante :
- 25 à 80 % d'au moins un métal M, de préférence 40 % à 70 %,
- 0,1 à 75 %, de préférence 5 à 45% d'au moins un élément (B) appartenant au groupe des éléments alcalins IA, alcalino-terreux IIA, terres rares IIIB, métaux de transition ou les éléments des groupes IIIA et IVA de la classification périodique des éléments.
- éventuellement 0,05 à 5 % d'au moins un métal (C) appartenant au groupe des métaux précieux du groupe VIII de la classification périodique.
- éventuellement un support inorganique contenant le métal (C)
Le complément en masse est apporté par l'oxygène des liaisons oxydes.
Le rapport atomique de l'élément M à l'élément B est généralement inférieur ou égal à 4 et de préférence compris entre 1 et 4.
Il existe différents procédés de préparation de ces matériaux [S.L. Suib, C-L. O'Young, Synthesis of Porous Materials, M.L. Occelli, H. Kessler (eds.) M. Dekker, Inc., p. 215 1997]. Il peut s'agir de synthèses par mélange et broyage de précurseurs solides inorganiques des métaux M et B, suivi d'une calcination. Les matériaux peuvent aussi être obtenus par chauffage à reflux de solutions de sels de précurseurs M et B, séchage et calcination, par précipitation des sels précurseurs, par voie sol-gel ou par synthèse hydrothermale qui consiste à chauffer sous pression autogène une solution contenant les éléments constituant le matériau final. Les solvants utilisés lors des synthèses sont généralement des solvants polaires, particulièrement l'eau, des acides ou des alcools (méthanol, éthanol, propanol-1 et -2, butanol, pentanol, hexanol...). Après précipitation des précurseurs, la structure des matériaux peut être obtenue lors de la phase de Calcination ; suivant la nature des précurseurs, elle peut aussi être obtenue en solution lors de réactions d'oxydoréduction entre les précurseurs, réactions qui peuvent être facilitées par variation de la température de la solution ou par modification du pH des solutions. Le solvant peut parfois servir d'agent réducteur, par exemple un alcool, un polyalcool (sucre...), ou des acides. Pour obtenir un pH acide, on peut ajouter à la solution un acide inorganique (HCl, HNO₃, H₂SO₄, H₂O₂...) ou organique (CH₃COOH, par exemple), de la même façon que pour obtenir un pH basique, on pourra utiliser des bases adaptées telles que l'ammoniaque, la soude, la potasse, voire des bases organiques (urée, ...).
Les matériaux obtenus à partir de ces synthèses peuvent encore être modifiés par échange ionique ou substitution isomorphe.

Le métal (C) éventuel est introduit par toutes les méthodes connues de l'homme du métier : il peut notamment être déposé à même la phase adsorbante par imprégnation en excès, à sec, échange ionique, ou encore être préalablement dispersé sur un support inorganique avant d'être mélangé mécaniquement à la phase adsorbante.

Le matériau utilisé dans le procédé selon l'invention présente généralement une surface spécifique comprise entre 3 et 250 m².g⁻¹.

Les phases adsorbantes peuvent se présenter sous forme de poudre, de billes, de pastilles, d'extrudés, elles peuvent être également déposées ou directement préparées sur des supports monolithiques en céramique ou en métal. Avantageusement, en vue d'augmenter la dispersion des matériaux et donc d'augmenter leur capacité à adsorber les NOₓ, les matériaux peuvent être déposés sur des supports poreux de grande surface spécifique tels que de la silice SiO₂, de l'alumine Al₂O₃ (alpha, béta, delta, gamma, khi, ou l'alumine thêta), de l'oxyde de titane TiO₂, de l'oxyde de zirconium ZrO₂, des carbures divisés, par exemple les carbures de silicium (SiC) simples ou mixtes, l'oxyde de magnésium MgO avant d'être mis en forme (extrusion, enduction...). On peut également utiliser comme supports des silice-alumines, des zéolites. Des oxydes mixtes ou des solutions solides comprenant au moins deux des oxydes précités peuvent être ajoutés.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit par fracturation.

Deux techniques sont mises en oeuvre pour préparer les catalyseurs utilisés dans le procédé de l'invention sur des supports (ou substrats) monolithique en céramique ou en métal.

La première comprend le dépôt direct sur le support monolithique, par la technique d'enduction connue de l'homme de l'art. La phase adsorbante peut être enduite juste après l'étape de co-précipitation, de synthèse hydrothermale ou de chauffage à reflux, l'étape ultime de calcination étant effectuée sur la phase déposée à même le monolithe, ou l'enduction peut être effectuée sur le monolithe après que le matériau soit préparé dans son état final, c'est à dire après l'étape ultime de calcination.
La seconde technique comprend tout d'abord, le dépôt de l'oxyde inorganique sur le support monolithique puis la calcination du monolithe entre 500 et 1100°C de telle manière que la surface spécifique de cet oxyde soit comprise entre 20 et 150 m²g⁻¹, puis l'enduction du substrat monolithique recouvert par l'oxyde inorganique avec la phase adsorbante.

Les supports monolithes qui peuvent être mis en oeuvre sont:
- soit en céramique, dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal généralement obtenu à partir d'alliage de fer, chrome et aluminium dopés éventuellement par du nickel, du cobalt, du cérium ou de l'yttrium.
   Les supports céramiques ont une structure de type nid d'abeille ou se présentent sous forme de mousse ou de fibres.
   Les supports métalliques peuvent être réalisés par l'enroulement de feuillards ondulés ou par l'empilement de feuilles métalliques également ondulées, constituant une structure en nid d'abeille à canaux droits ou à canaux en zigzag communiquant entre eux ou non. Ils peuvent être également réalisés à partir de fibres ou de fils métalliques enchevêtrés, tissés, tressés ou tricotés.
   Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.
   La quantité de phase adsorbante déposée ou préparée directement sur le support (ou substrat) céramique ou métallique est généralement comprise entre 20 et 300g par litre dudit support et avantageusement entre 50 et 200g par litre.

Les matériaux utilisés dans le procédé selon l'invention permettent donc d'adsorber et de désorber les oxydes d'azote présents dans les gaz, en particulier les gaz d'échappement.

Ces matériaux sont caractérisés en ce qu'ils sont capables d'adsorber les NOₓ à une température généralement comprise entre 50 et 450°C et de préférence entre 150 et 350°C, et de manière plus préférée entre 200 et 350°C. Les dits oxydes d'azote peuvent être désorbés par chauffage à une température généralement comprise entre 300 et 550°C et de manière préférée comprise entre 400 et 500°C. Ils peuvent aussi être désorbés par variation de la composition des gaz, en augmentant par exemple de façon ponctuelle la concentration en composés réducteurs tels que des hydrocarbures, l'hydrogène, le monoxyde de carbone, à des températures comprises ente 150 et 550°C, de préférence entre 200 et 450°C et de manière plus préférée entre 300 et 400°C. Thermiquement ou chimiquement, la désorption des oxydes d'azote peut être déclenchée dans des gammes de températures où les catalyseurs classiques de réduction des NOx sont efficaces. De plus, la désorption thermique selon l'invention peut avoir lieu sur d'étroites fenêtres de températures avec généralement une amplitude de 80°C. Or, pour les voitures Diesel, la température des gaz d'échappement est généralement comprise entre 150 et 300°C et dépasse rarement les 500°C. Les matériaux utilisés dans le procédé selon l'invention sont donc adaptés à l'adsorption des oxydes d'azote présents dans les gaz d'échappement, de moteurs stationnaires ou particulièrement de moteurs automobiles Diesel ou à allumage commandé (moteurs dits à réglage pauvre), mais également dans les gaz issus de turbine à gaz fonctionnant avec des carburants gazeux ou liquides. Ces gaz se caractérisent aussi par des teneurs en oxydes d'azote de quelques dizaines à quelques milliers de parties par million (ppm), et peuvent contenir des teneurs comparables en composés réducteurs (CO, H₂, hydrocarbures) et en soufre, ainsi que des concentrations importantes en oxygène (de 1 à près de 20% volume) et en vapeur d'eau. Le matériau selon l'invention peut être utilisé à des WH (vitesses volumiques horaires correspondant à des rapports de volume de monolithe par débit de gaz) du gaz d'échappement généralement comprises entre 500 et 150 000 h-1, par exemple entre 5000 et 100 000 h-1.
L'invention concerne également l'utilisation des matériaux pour l'adsorption et la désorption des oxydes d'azote dans un procédé d'élimination des oxydes d'azote, tout particulièrement dans un milieu sur-stoechiométrique en oxydants. Ainsi le matériau selon l'invention peut être utilisé dans un procédé comprenant :
- une étape d'adsorption d'au moins une partie desdits oxydes d'azote sur un matériau d'adsorption tel que défini dans la présente invention,
- une étape de désorption des oxydes d'azote, se faisant par augmentation de la température, ou par variation de la composition des gaz d'échappement,
- une étape de réduction sélective d'au moins une partie des oxydes d'azote en azote moléculaire et/ou protoxyde d'azote par des agents réducteurs en présence d'au moins un catalyseur de réduction des oxydes d'azote.

Ainsi le procédé d'élimination des oxydes d'azote comprend lors de l'étape de réduction des oxydes d'azote, l'utilisation d'un catalyseur actif et sélectif pour la réduction des oxydes d'azote en azote moléculaire dans un milieu sur-stoechiométrique en oxydants, par des agents réducteurs. Les catalyseurs de réduction des oxydes d'azote en azote et/ou protoxyde d'azote comprennent généralement au moins un oxyde inorganique réfractaire et peuvent comprendre au moins une des zéolithes, choisie par exemple parmi les zéolithes MFI, NU-86, NU-87, EU-1 et généralement au moins un élément choisi parmi les éléments des groupes VIB, VIIB, VIII et IB des métaux de transition. Ces catalyseurs peuvent contenir éventuellement au moins un élément choisi parmi les métaux nobles du groupe VIII, par exemple le platine, le rhodium, le ruthénium, l'iridium, le palladium et éventuellement au moins un élément choisi parmi les éléments des groupes IIA des alcalino-terreux et IIIB des terres rares. Par exemple les catalyseurs de réduction des oxydes d'azote comprennent les combinaisons suivantes : Cu-ZSM5, Cu-MFI, Fe-MFI, Fe-ZSM5, Ce-MFI, Ce-ZSM5, Pt-MFI, Pt-ZSM5.
L'oxyde inorganique réfractaire est choisi parmi les supports de type Al₂O₃, SiO₂, ZrO₂ et TiO₂, de préférence l'alumine.
Les agents réducteurs sont choisis parmi CO, H₂, les hydrocarbures, présents dans le carburant ou ajoutés sous forme de produits frais.

Dans le cas où le matériau d'adsorption des oxydes d'azote contient au moins un élément (C) choisi parmi les métaux nobles du groupe VIII de la classification périodique des éléments, le procédé d'élimination des oxydes d'azote comprend :
- une étape d'adsorption d'au moins une partie desdits oxydes d'azote sur le matériau tel que défini dans la présente invention,
- une étape de désorption des oxydes d'azote,
- une étape de réduction sélective d'au moins une partie des oxydes d'azote en azote moléculaire et/ou protoxyde d'azote en présence de composés réducteurs sur le matériau tel que défini dans la présente invention.
Ainsi, la réduction des oxydes d'azote en azote et/ou protoxyde d'azote peut avoir lieu directement sur le matériau d'adsorption qui permet à la fois de piéger les oxydes d'azote, de désorber lesdits oxydes d'azote et de les réduire.

Avantageusement, pour être utilisé dans un procédé d'élimination des oxydes d'azote comprenant une étape d'adsorption puis de désorption des oxydes d'azote, le matériau est installé en amont d'un filtre à particules ou est directement enduit sur les parois composant un filtre à particules.

### EXEMPLES

Les exemples, 1 à 6 et 9 à 13 ci-après, illustrent l'invention sans en limiter la portée.
Les exemples 7 et 8, décrivent les matériaux utilisés en piégeage des NOx selon l'art antérieur. A titre de comparaison, tous ces catalyseurs sont testés au laboratoire en micro unité avec un mélange de gaz synthétique.
Dans tous les exemples, la désignation de phase adsorbante déposée sur le support (ou substrat) correspond, après perte au feu, à la somme des éléments constituant le matériau décrit dans la procédure ci-dessus, à savoir : le ou les éléments (M) contenu au centre des octaèdres d'oxygène, au moins un élément (B), éventuellement au moins un métal précieux (C).
Les teneurs massiques des différents éléments constituants la phase adsorbante sont mentionnées en pourcentage dans le tableau I. L'oxygène des phases oxydes n'est pas pris en compte dans le bilan de masse.

### Exemple 1 (invention)

On mélange trois solutions aqueuses de 150 ml contenant chacune, 20 g de MnAc₂.4H₂O, 90 g de KOH et 5.1 g de KMnO₄. On chauffe le mélange à reflux pendant 24 heures. On filtre le précipité, puis on le lave et on le sèche à l'étuve à 100°C. Avant utilisation, il est calciné sous air à 700°C.

### Exemple 2 (invention)

On mélange trois solutions aqueuses de 150 ml contenant chacune, 20 g de MnAc₂.4H₂O, 90 g de KOH et 5.1 g de KMnO₄. On laisse le mélange mûrir à température ambiante pendant une semaine. On filtre le précipité, puis on le lave et on le sèche à l'étuve à 100°C. Avant utilisation, il est calciné sous air à 700°C.

### Exemple 2bis (invention)

Dans 450ml d'eau on ajoute 20 g de MnAc₂.4H₂O, 3.5 g de MgAc₂.4H₂O, 90 g de KOH et 5.1 g de KMnO₄. On laisse le mélange mûrir à température ambiante pendant une semaine. On filtre le précipité, puis on le lave et on le sèche à l'étuve à 100°C. Avant utilisation, il est calciné sous air à 700°C.

### Exemple 3

On dissout 6 g de MnAc₂.4H₂O et 2-6 g de KMnO₄ dans deux litres d'éthanol. On chauffe le mélange à reflux pendant 2 heures, puis on extrait le solvant sous vide. Le précipité est séché à l'étuve à 100°C, puis calciné sous air à 700°C.

### Exemple 4

On dissout 10 g de glucose dans 40 ml d'eau et 6 g de KMnO₄ dans 100 ml d'eau. On ajoute rapidement la seconde solution dans la première. On sèche le gel formé puis on le calcine sous air à 700°C.

### Exemple 5

On mélange mécaniquement K₂CO₃ et TiO₂ (forme anatase) dans un rapport molaire 1:3,5 que l'on chauffe pendant 20 heures à 800°C.

### Exemple 6

On mélange mécaniquement RbMn0₄ et TiO₂ (forme anatase) dans un rapport molaire 3:5 que l'on chauffe pendant 20 heures à 1000°C.

### Exemple 7 (comparatif)

On prépare le matériau d'occlusion des NOₓ de formule YBa₂Cu₃O₇₋ₓ selon la technique décrite dans le brevet EP 0 664 147, et qui présente la structure pérovskite (vérifié par diffraction des rayons X).

### Exemple 8 (comparatif)

On utilise un matériau de formule Pt-Rh/Ba-La-CeO₂-Al₂O₃-TiO₂ tel que décrit dans la demande de brevet EP 0 666 103 A1, pour piéger les NOx par formation de nitrates.

### Exemple 9 (invention)

On reproduit le catalyseur de l'exemple 1 auquel on ajoute de l'eau de façon à obtenir une suspension et à permettre l'enduction sur des monolithes de cordiérite (densité de cellules : 400cpsi soit 620 cellules/cm² soit encore 6,20.10⁵ cellules/m², l'unité cpsi signifiant *cells per square inch*). Après calcination à 550°C, la teneur en matières enduites correspond à 100 grammes de matière sèche par litre de monolithe.

### Exemple 10 (invention)

On reproduit la préparation du monolithe de cordiérite enduit de matériau de l'exemple 9 sur lequel on dépose du platine et du rhodium par imprégnation à sec à partir d'une solution de Pt(NH₃)₄(NO₃)₂ et de Rh(NO₃)₃.

**Tableau I : Composition massique des matériaux préparés selon les exemples 1 à 7**

| **Exemples** | **Matériaux** | S_{BET} (m²/g) | K | Rb | Mg | Ba | La | Ce | Y | Cu | Zn | Mn | Ti | Al | Pt | Rh |
|---|---|---|---|---|---|---|---|---|---|---|---|---|---|---|---|---|
| Exemple 1 (inv.) | K-Mn | 7 | 11.3 | | | | | | | | | 54.4 | | | | |
| Exemple 2 (inv.) | K-Mn | 29 | 20.8 | | | | | | | | | 46.1 | | | | |
| Exemple 2bis (inv.) | K-Mg-Mn | 9 | 15.5 | | 3.3 | | | | | | | 46.1 | | | | |
| Exemple 3 (inv.) | K-Mn | 8 | 14.4 | | | | | | | | | 47.6 | | | | |
| Exemple 4 (inv.) | K-Mn | 7 | 10.6 | | | | | | | | | 53.4 | | | | |
| Exemple 5 (inv.) | K-Ti | 6 | 18.9 | | | | | | | | | | 40.8 | | | |
| Exemple 6 (inv.) | Rb-MnTi | 3 | | 28 | | | | | | | | 18.0 | 26.0 | | | |
| Exemple 7 (comp.) | YBaCu0 | 4 | | | | 41.7 | | | 13.5 | 29.0 | | | | | | |
| Exemple 8 (comp.) | Pt-Rh/Ba-La-CeO₂-Al₂O₃-TiO₂ | 120 | | | | 18 | 3 | 11 | | | | | 8.5 | 18.1 | 0.5 | 0.05 |
| Exemple 9 (inv.) | K-Mn_monolithe 100g/l | 8 | 10.2 | | | | | | | | | 53.7 | | | | |
| Exemple 10 (inv.) | Pt-Rh/K-Mn_monolithe 100g/l | 7 | 10.1 | | | | | | | | | 52.8 | | | 0.5 | 0.05 |

### Exemple 11 : Résultats des tests d'adsorption et de désorption thermique des oxydes d'azote

Les matériaux testés sont installés dans un micro-réacteur placé au centre d'un four. Ils subissent un prétraitement à 600°C pendant 5 heures sous un mélange gazeux constitué d'azote contenant 18,5 % O₂ et 4 % H₂O. Sous le même mélange, ces matériaux sont amenés à différentes températures (T_{ads}) comprises entre 150 et 400°C, où ils sont alors traversés pendant 20 minutes par un mélange gazeux contenant des oxydes d'azote.

| | | |
|---|---|---|
| **vitesse spatiale horaire (WH)** : | | 5000h⁻¹ |
| **composition du mélange**: | | |
| | NOₓ : | 800ppm : NO 650ppm, NO2 150ppm |
| | O₂ : | 18,5 % |
| | H₂O: | 4 % |
| | N₂ : | complément à 100% |

Après les vingt minutes d'adsorption, l'alimentation en oxydes d'azote est coupée, et les matériaux subissent un chauffage pour désorber les NOₓ :

| | | |
|---|---|---|
| **vitesse spatiale horaire (VVH)** : | | 5000h⁻¹ |
| **composition du mélange:** | | |
| | O₂ : | 18, 5 % |
| | H₂O : | 4 % |
| | N₂ : | complément à 100% |
| **fenêtre de température de désorption** : | | de T_{ads} à 600°C |
| **rampe de température** : | | 10°C/min |

Dans le tableau II ci-dessous sont rassemblées les valeurs indiquant la quantité d'oxydes d'azote adsorbés ainsi que les températures de désorption de ces oxydes. A l'exception du matériau de l'exemple 8 qui contient déjà du platine dans sa composition, on a ajouté aux résultats d'adsorption des matériaux préparés précédemment ceux des mêmes composés auxquels a été mélangée une phase Pt/SiO₂ équivalent à un pourcentage massique de 1% par rapport à la masse totale du mélange. Il a été vérifié que, dans nos conditions, cette phase Pt/SiO₂ ne joue pas le rôle de masse adsorbante des oxydes d'azote.

**Tableau II : Résultats des tests d'adsorption et de désorption en micro - unité**

| **Exemple** | **Matériaux** | **Capacité** (mgNO/g) à différentes températures d'adsorption | | | | | **T** désorption (°C) |
|---|---|---|---|---|---|---|---|
| | | 150°C | 200°C | 300°C | 350°C | 400°C | |
| 1 (inv.) | K-Mn | 4 | 5 | 11 | 11.5 | | 485 |
| 2 (inv) | K-Mn | 3.2 | 3.8 | 6.5 | 6.8 | | 530 |
| 2bis (inv.) | K-Mg-Mn | 6.5 | 8.7 | 12.1 | 13 | | 480 |
| 2bis (inv.) | K-Mg-Mn + Pt/SiO₂ | 8.5 | 10.5 | 12.5 | | | 420 |
| 3 (inv) | K-Mn | 5.0 | 8.5 | 11.6 | 14 | 14 | 510 |
| | | | | | 28* | | |
| 3 (inv) | K-Mn + Pt/SiO₂ | 6.0 | 9.0 | 12.2 | | | 450 |
| 4 (inv) | K-Mn | 4.7 | 8.2 | 11.8 | | | 445 |
| 5 (inv) | K-Ti | 2.1 | 2.8 | 1.6 | | | 465 |
| 6 (inv) | Rb-MnTi | 1.5 | 2.8 | 2.1 | | | 400 |
| 7 (comp) | YBaCuO | | 1,1 | 1.4 | | 3.2 | 490 |
| 7 (comp) | YBaCuO + Pt/SiO2 | | | 3.4 | | 3.2 | 485 |
| 8 (comp) | PtRh-Ba-Ce-La/TiO₂-Al₂O₃ | | 6.1 | | 8.2 | | 570 |

| | | | | | | | |
|---|---|---|---|---|---|---|---|
| *Après adsorption pendant 90 minutes | | | | | | | |

On constate que les matériaux utilisés dans le procédé selon l'invention, particulièrement quand ils n'ont pas de phase au platine, sont plus efficaces dans l'adsorption des oxydes d'azote que les matériaux testés pour comparaison. Les matériaux utilisés dans le procédé selon la présente invention procurent donc l'avantage d'être très adsorbants, sans la contrainte de la présence de platine. De plus, les matériaux utilisés dans le procédé selon la présente invention montrent une température de désorption des oxydes d'azote relativement basse, adéquate pour une application dans une ligne d'échappement d'un moteur Diesel.

Dès 150°C, les matériaux utilisés dans le procédé selon la présente invention présentent une capacité d'adsorption satisfaisante, ce qui permet de travailler sur une large gamme de températures (150 - 350°C). L'analyse des gaz en sortie du micro-réacteur montre que les matériaux selon la présente invention adsorbent, jusqu'à leur saturation, la totalité des NOₓ (indifféremment NO ou NO₂) avec lesquels ils sont en contact entre 50°C et la température de désorption, c'est pourquoi les matériaux selon la présente invention présentent de bonnes performances d'adsorption, même en absence de phase oxydante (par exemple Pt supporté).

### Exemple 12 : Résultats des tests d'adsorption et de désorption thermique des NOₓ, à grande WH et en présence d'hydrocarbures et de CO₂.

Le matériau de l'exemple 9 est installé dans un réacteur placé au centre d'un four. Il subit un prétraitement à 600°C pendant 5 heures sous un mélange gazeux constitué d'azote contenant 18.5% O₂, 5% CO₂ 4% H₂O et 2000 ppmC de C₂H₄. Sous le même mélange, ces matériaux sont amenés à la température de 300°C, où ils sont alors traversés pendant 20 minutes par un mélange gazeux contenant des oxydes d'azote.

| | | |
|---|---|---|
| **vitesse spatiale horaire (VVH)** : | | 50 000 h⁻¹ |
| **composition du mélange**: | | |
| | NOₓ : | 800ppm : NO 650ppm, NO2 150ppm |
| | O₂ : | 18.5% |
| | H₂O : | 4% |
| | CO₂ : | 5% |
| | C₂H₄ : | 2000 ppmC |
| | N₂ : | complément à 100% |

Après les vingt minutes d'adsorption, l'alimentation en oxydes d'azote est coupée, et les matériaux subissent un chauffage pour désorber les NOₓ :

| | | |
|---|---|---|
| **vitesse spatiale horaire (WH)** : | | 50 000 h⁻¹ |
| **composition du mélange**: | | |
| | O₂ : | 18.5% |
| | H₂O : | 4% |
| | CO₂: | 5% |
| | C₂H₄ : | 2000 ppmC |
| | N₂ : | complément à 100% |
| **fenêtre de température de désorption :** | | 300 à 600°C |
| **rampe de température :** | | 10°C/min |

Dans le tableau III ci-dessous, sont rassemblées pour le matériau de l'exemple 9 les valeurs indiquant la quantité d'oxydes d'azote adsorbés ainsi que les températures de désorption de ces oxydes ; elles sont comparées aux résultats obtenus dans les conditions précédentes pour le même matériau.

On constate que les matériaux utilisés dans le procédé selon la présente invention et représentés ici par l'exemple 1 et l'exemple 9 (le matériau de l'exemple 9 ne différant du matériau de l'exemple 1 que par le support) montrent une efficacité comparable en adsorption des oxydes d'azote, que la WH soit égale à 5000 ou à 50000 h⁻¹. De plus, si le mélange est rendu plus complexe par ajout d'autres molécules gazeuses (CO₂ C₂H₄) classiquement contenues dans des gaz d'échappement et dont la taille pourrait permettre qu'elles s'adsorbent sur les mêmes sites que les NOₓ, on s'aperçoit que la capacité d'adsorption n'est abaissée que de 30% environ.
De tels résultats montrent que les matériaux utilisés dans le procédé selon la présente invention peuvent être utilisés pour le piégeage des oxydes d'azote contenus dans des gaz d'échappement, présentant de fortes WH et des molécules gazeuses autres que les NOₓ.
Les températures de désorption des oxydes d'azote piégés dans le matériau ne sont pas significativement modifiées ni par l'augmentation de la WH ni par la présence d'autres molécules adsorbées sur le matériau.

**Tableau III : Résultats des tests d'adsorption**

| **Exemple** | **WH** (h⁻¹) | **Composition du mélange lors du prétraitment** | **Composition du mélange lors de l'adsorption** | **Capacité** à 300°C (mgNO/g) | **T_{dés}** (°C) |
|---|---|---|---|---|---|
| 1 (inv.) | 5 000 | O₂, H₂O, N₂ | NO, O₂, H₂O, N₂ | 11.0 | 485 |
| 9 (inv.) | 50 000 | O₂, H₂O, N₂ | NO, O₂, H₂O, N₂ | 9.0 | 455 |
| 9 (inv.) | 50 000 | O₂, CO₂, H₂O, C₂H₄, N₂ | NO, O₂, CO₂, H₂O, C₂H₄, N₂ | 6.4 | 475 |

### Exemple 13: Résultats des tests d'adsorption et de désorption par variation de la richesse des gaz et influence du soufre

Les matériaux des exemples 9 et 90 sont installés dans un réacteur placé au centre d'un four. Ils subissent un prétraitement à 600°C pendant 5 heures sous un mélange gazeux constitué d'azote contenant 18,5 % O₂ et 4 % H₂O puis sont ramenés sous le même mélange à 350°C. Les matériaux sont alors traversés par un gaz contenant des oxydes d'azote dont la composition est transitoire, gaz en alternance composé d'un mélange pauvre en CO et riche en O₂ pendant 90 secondes puis d'un mélange riche en CO et pauvre en O₂ pendant 30 sec.

| | | |
|---|---|---|
| **vitesse spatiale horaire (VVH)** : | | 50 000h⁻¹ |
| **composition du mélange pauvre (R=0,3) :** | | |
| | NOₓ : | 400ppm (NO 390ppm, NO2 10ppm) |
| | CO : | 0.1 % |
| | CO₂ : | 5 % |
| | HC : | 3000ppmC |
| | O₂ : | 18, 5 % |
| | H₂O : | 4 % |
| | N₂ : | complément à 100% |
| | SO₂ : | 20ppm (test avec soufre uniquement) |
| | | |
| **composition du mélange riche (R=1,2)** : | | |
| | NOₓ : | 400ppm (NO 390ppm, NO2 10ppm) |
| | CO | 6% |
| | CO₂ : | 5 % |
| | HC : | 3000ppmC |
| | O₂ : | 2% |
| | H₂O : | 4 % |
| | N₂ : | complément à 100% |
| | SO₂ : | 20ppm (test avec soufre uniquement) |

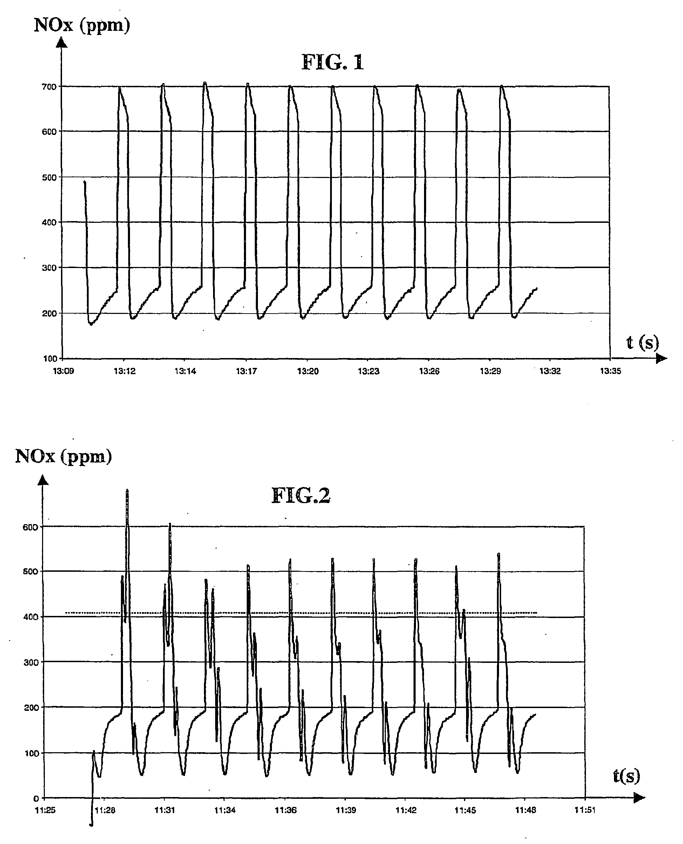

La figure 1 annexée montre le mode de fonctionnement du matériau de l'exemple 9 au palier à 350°C en absence de soufre.
A chaque passage en phase pauvre, le matériau adsorbe une quantité importante d'oxydes d'azote qui sont en majorité désorbés sans être modifiés lors du passage en milieu riche.

La figure 2 annexée montre le mode de fonctionnement du matériau de l'exemple 10 au palier à 350°C en absence de soufre. La différence entre le matériau de l'exemple 9 et celui de l'exemple 10 est la présence de métal noble imprégné.
On constate que la présence de métal précieux améliore la capacité d'adsorption du matériau en phase pauvre, mais surtout permet d'éliminer par réduction lors de la phase riche les oxydes d'azote qui avaient été adsorbés en phase pauvre.

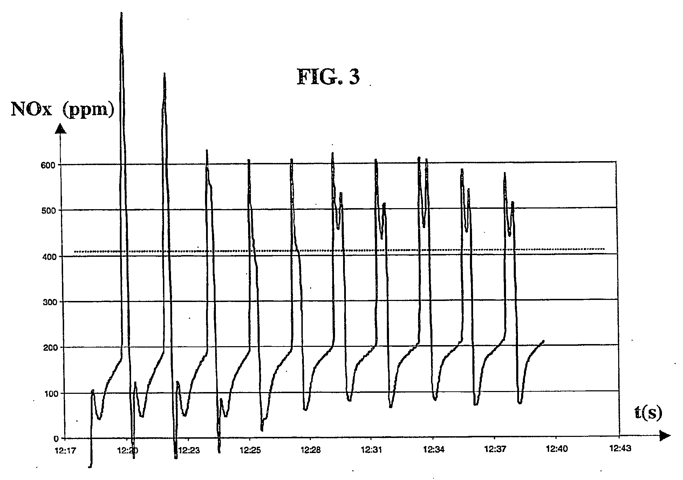

La figure 3 annexée montre le mode de fonctionnement du matériau de l'exemple 10 au palier à 350°C en présence de soufre (20ppm dans la phase gazeuse). Cette teneur en soufre admise dans la phase gazeuse représente approximativement une teneur en soufre dans le carburant de l'ordre de 350ppm.

On constate que les capacités en adsorption et en réduction des NOx du matériau utilisé dans le procédé revendiqué par la demanderesse ne sont pas affectées par la présence de soufre.

## Revendications

1. Procédé d'élimination des oxydes d'azote dans des gaz d'échappement, en particulier de moteurs à combustion interne de véhicules automobiles, comprenant une étape d'adsorption des oxydes d'azote effectuée à une température comprise entre 50 et 450°C, ledit procédé étant réalisé en présence d'un matériau cristallin comprenant une phase adsorbante incluant des octaèdres MO₆ comprenant au moins un élément M choisi parmi les éléments des groupes IIIB, IVB, VB, VIB, VIIB, VIII, IB, IIB, IIIA et IVA de la classification périodique des éléments ou le mélange d'au moins deux de ces éléments, lesdits octaèdres s'enchaînant de façon à ce que la structure génère des feuillets, et incluant en outre au moins un élément (B) choisi dans le groupe constitué par les éléments alcalins, alcalino-terreux, les terres rares, les métaux de transition, les éléments des groupes IIIA, IVA de la classification périodique des éléments, et se situant dans l'espace interfeuillet.

2. Procédé selon la revendication 1 tel que le degré de valence moyen des métaux (M) présent dans ledit matériau cristallin est environ +4.

3. Procédé selon la revendication 1 ou la revendication 2 tel qu'au moins la majeure partie de l'élément (M) est choisie parmi le manganèse, le tungstène, le zirconium, le titane, l'étain, le molybdène, le chrome, le niobium, le vanadium, ou le mélange d'au moins deux de ces éléments.

4. Procédé selon la revendication 3 tel que ledit matériau cristallin comprend en outre au moins un élément M choisi parmi l'aluminium, le zinc, le cadmium, le cuivre, le nickel, le cobalt, le fer, le chrome, le scandium, le gallium, l'yttrium et l'indium.

5. Procédé selon l'une des revendications 1 à 4 tel que ledit matériau comprend en outre au moins un métal (C) choisi parmi les métaux précieux du groupe VIII de la classification périodique des éléments.

6. Procédé selon la revendication 5 tel que l'élément (C) est le platine, un mélange de platine et de rhodium, de palladium et de rhodium, ou un mélange de platine, de rhodium et de palladium.

7. Procédé selon la revendication 5 ou 6 tel que l'élément (C) est déposé à même la phase adsorbante ou est préalablement dispersé sur un support inorganique avant d'être mélangé à la phase adsorbante.

8. Procédé selon l'une des revendications 1 à 7 tel que ledit matériau comprend en pourcentage massique :
- 25 à 80 % d'au moins un métal M,
- 0,1 à 75 % d'au moins un élément (B)
- éventuellement 0,05 à 5 % d'au moins un métal (C)
- éventuellement un support inorganique contenant le métal (C).

9. Procédé selon l'une des revendications 1 à 8 tel que la surface spécifique dudit matériau est comprise entre 3 et 250 m².g⁻¹

10. Procédé selon l'une des revendications 1 à 9 tel que ledit matériau comprend au moins un support poreux.

11. Procédé selon la revendication 10 tel que le support poreux dudit matériau est choisi parmi les composés suivants : SiO₂, Al₂O₃, TiO₂, ZrO₂, SiC, MgO, silice-alumine, zéolithe.

12. Procédé selon l'une des revendications 1 à 11 tel que ledit matériau comprend au moins un support rigide.

13. Procédé selon l'une des revendications 1 à 12 comprenant en outre une étape de désorption des oxydes d'azote mise en oeuvre par élévation de la température.

14. Procédé selon la revendication 13 tel que la désorption thermique des oxydes d'azote est effectuée à une température comprise entre 300 et 550°C.

15. Procédé selon l'une des revendications 1 à 12 comprenant en outre une étape de désorption des oxydes d'azote mise en oeuvre par variation de la composition des gaz.

16. Procédé selon la revendication 15 tel que la désorption chimique des oxydes d'azote est effectuée à une température comprise entre 150 et 550°C.

17. Procédé selon l'une des revendications 1 à 16 comprenant en outre une étape de réduction des oxydes d'azote en azote moléculaire et/ou en protoxyde d'azote.

18. Procédé selon la revendication 17 telle que la réduction des oxydes d'azote a lieu en présence d'un catalyseur comprenant au moins un oxyde inorganique réfractaire, éventuellement au moins une zéolithe, au moins un élément choisi parmi les éléments des groupes VIB, VIIB, VIII et IB des métaux de transition, éventuellement au moins un élément choisi parmi les métaux nobles du groupe VIII, et éventuellement au moins un élément choisi parmi les éléments des groupes IIA des alcalino-terreux et IIIB des terres rares.

19. Procédé selon l'une des revendications 13 à 16 tel que ledit matériau est installé en amont d'un filtre à particules ou est directement enduit sur les parois composant un filtre à particules.

20. Procédé selon l'une des revendications 1 à 19 tel que ledit matériau est utilisé dans des gaz d'échappement de moteurs à combustion interne de véhicules.

21. Procédé selon la revendication 20 tel que ledit matériau est utilisé dans un moteur de type Diesel ou essence à réglage pauvre.

## Claims

1. A process for eliminating oxides of nitrogen from exhaust gases, in particular from automotive vehicle internal combustion engines, comprising a step for adsorption of oxides of nitrogen carried out at a temperature in the range 50°C to 450°C, said process being implemented in the presence of a crystalline material comprising an adsorbent phase including MO₆ octahedra comprising at least one element M selected from elements from groups IIIB, IVB, VB, VIB, VIIB, VIII, IB, IIB, IIIA and IVA of the periodic table or a mixture of at least two of said elements, said octahedra connecting together to form a lamellar structure, and further comprising at least one element (B) selected from the group formed by the alkaline elements, the alkaline-earth elements, the rare earth elements, the transition metals and elements from groups IIIA, IVA of the periodic table and located in the interlamellar space.

2. A process according to claim 1, in which the average valency of the metals (M) present in said crystalline material is about +4.

3. A process according to claim 1 or claim 2, in which at least the major portion of element (M) is selected from manganese, tungsten, zirconium, titanium, tin, molybdenum, chromium, niobium, vanadium, or a mixture of at least two of said elements.

4. A process according to claim 3, in which said crystalline material further comprises at least one element M selected from aluminium, zinc, cadmium, copper, nickel, cobalt, iron, chromium, scandium, gallium, yttrium and indium.

5. A process according to one of claims 1 to 4, in which said crystalline material further comprises at least one metal (C) selected from noble metals from group VIII of the periodic table.

6. A process according to claim 5, in which said element (C) is platinum, a mixture of platinum and rhodium, palladium and rhodium, or a mixture of platinum, rhodium and palladium.

7. A process according to claim 5 or claim 6, in which the element (C) is deposited directly on to the adsorbent phase or is dispersed on an inorganic support in advance before being mixed with the adsorbent phase.

8. A process according to one of claims 1 to 7 in which said material comprises, as a percentage by weight:
• 25% to 80% of at least one metal M;
• 0.1% to 75% of at least one element (B);
• optionally, 0.05% to 5% of at least one metal (C);
• optionally, an inorganic support containing the metal (C).

9. A process according to one of claims 1 to 8, in which the specific surface area of said material is in the range 3 to 250 m²/g.

10. A process according to one of claims 1 to 9, in which said material comprises at least one porous support.

11. A process according to claim 10, in which the porous support of said material is selected from the following compounds: SiO₂, Al₂O₃, TiO₂, ZrO₂, SiC, MgO, silica-alumina and zeolite.

12. A process according to one of claims 1 to 11, in which said material comprises at least one rigid support.

13. A process according to one of claims 1 to 12 further comprising a step for desorbing the oxides of nitrogen implemented by raising the temperature.

14. A process according claim 13 in which the thermal desorption of the oxides of nitrogen is carried out at a temperature in the range 300°C to 550°C.

15. A process according to one of claims 1 to 12 further comprising a step for desorbing the oxides of nitrogen implemented by varying the gas composition.

16. A process according to claim 15 **characterized in that** the chemical desorption of the oxides of nitrogen is carried out at a temperature in the range 150°C to 550°C.

17. A process according to one of claims 1 to 16 further comprising a step for reducing oxides of nitrogen to molecular nitrogen and/or nitric oxide.

18. A process according to claim 17 in which the oxides of nitrogen are reduced in the presence of a catalyst comprising at least one inorganic refractory oxide, optionally at least one zeolite, at least one element selected from elements from transition metal groups VIB, VIIB, VIII and IB, optionally at least one element selected from the noble metals of group VIII, and optionally at least one element selected from elements from the alkaline-earth group IIA, and the rare earth group IIIB.

19. A process according to one of claims 13 to 16 in which said material is installed upstream of a particle filter or is directly coated onto the walls of a particle filter.

20. A process according to one of claims 1 to 19 in which said material is used in an exhaust gas for vehicle internal combustion engines.

21. A process according to claim 20 in which said material is used in a Diesel type motor or a lean bum engine.

## Patentansprüche

1. Verfahren zur Beseitigung von Stickoxiden in Abgasen, insbesondere von Kraftfahrzeugverbrennungsmotoren, das einen Schritt der Adsorption der Stickoxide umfasst, der bei einer Temperatur im Bereich zwischen 50 und 450°C durchgeführt wird, wobei das Verfahren in Gegenwart eines kristallinen Materials ausgeführt wird, das eine adsorbierende Phase umfasst, die M06-Octaeder einschließt, die mindestens ein Element M umfassen, ausgewählt aus den Elementen der Gruppen IIIB, IVB, VB, VIB, VIIB, VIII, IB, IIB, IIIA und IVA des Periodensystems der Elemente oder die Mischung aus mindestens zwei dieser Elemente, wobei die Oktaeder derart verkettet sind, dass die Struktur Schichten erzeugt, und ferner mindestens ein Element (B) einschließt, ausgewählt aus der Gruppe, bestehend aus den alkalischen, erdalkalischen Elementen, den Seltenerden, den Übergangsmetallen, den Elementen der Gruppen IIIA, IVA des Periodensystems der Elemente, und das in dem Raum zwischen den Schichten liegt.

2. Verfahren nach Anspruch 1, bei dem der Grad der mittleren Valenz der Metalle (M), die in dem kristallinen Material vorhanden ist, ungefähr +4 ist.

3. Verfahren nach Anspruch 1 oder Anspruch 2, bei dem mindestens der größere Teil des Elements (M) ausgewählt ist aus Mangan, Wolfram, Zirconium, Titan, Zinn, Molybdän, Chrom, Niob, Vanadium oder der Mischung aus mindestens zwei dieser Elemente.

4. Verfahren nach Anspruch 3, bei dem das kristalline Material ferner mindestens ein Element M umfasst, ausgewählt aus Aluminium, Zink, Cadmium, Kupfer, Nickel, Cobalt, Eisen, Chrom, Scandium, Gallium, Yttrium und Indium.

5. Verfahren nach einem der Ansprüche 1 bis 4, bei dem das Material ferner mindestens ein Metall (C) umfasst, ausgewählt aus den Edelmetallen der Gruppe VIII des Periodensystems der Elemente.

6. Verfahren nach Anspruch 5, bei dem das Element (C) Platin, eine Mischung aus Platin und Rhodium, aus Palladium und Rhodium oder eine Mischung aus Platin, Rhodium und Palladium ist.

7. Verfahren nach Anspruch 5 oder 6, bei dem Element (C) direkt auf der adsorbierenden Phase abgelagert wird, oder zuvor auf einem anorganischen Träger dispergiert wird, bevor es mit der adsorbierenden Phase gemischt wird.

8. Verfahren nach einem der Ansprüche 1 bis 7, bei dem das Material in Masseprozent umfasst:
- 25 bis 80 % mindestens eines Metalls M,
- 0,1 bis 75 % mindestens eines Elements (B),
- gegebenenfalls 0,05 bis 5 % mindestens eines Metalls (C),
- gegebenenfalls einen anorganischen Träger, der das Metall (C) enthält.

9. Verfahren nach einem der Ansprüche 1 bis 8, bei dem die spezifische Oberfläche des Materials im Bereich zwischen 3 und 250 m²g⁻¹ liegt.

10. Verfahren nach einem der Ansprüche 1 bis 9, bei dem das Material mindestens einen porösen Träger umfasst.

11. Verfahren nach Anspruch 10, bei dem der poröse Träger des Materials aus den folgenden Verbindungen ausgewählt ist: SiO₂, Al₂O₃, TiO₂, ZrO₂, SiC, MgO, Alumosilicat, Zeolith.

12. Verfahren nach einem der Ansprüche 1 bis 11, bei dem das Material mindestens einen harten Träger umfasst.

13. Verfahren nach einem der Ansprüche 1 bis 12, das ferner einen Schritt der Desorption der Stickoxide umfasst, der durch Erhöhen der Temperatur erfolgt.

14. Verfahren nach Anspruch 13, bei dem die thermische. Desorption der Stickoxide bei einer Temperatur im Bereich zwischen 300 und 550 °C durchgeführt wird.

15. Verfahren nach einem der Ansprüche 1 bis 12, das ferner einen Schritt der Desorption der Stickoxide umfasst, der durch Veränderung der Zusammensetzung der Gase erfolgt.

16. Verfahren nach Anspruch 15, bei dem die chemische Desorption der Stickoxide bei einer Temperatur im Bereich zwischen 150 und 500 °C durchgeführt wird.

17. Verfahren nach einem der Ansprüche 1 bis 16, das ferner einen Schritt der Reduktion der Stickoxide in molekularen Stickstoff und/oder Stickstoffmonoxid umfasst.

18. Verfahren nach Anspruch 17, bei dem die Reduktion der Stickoxide in Gegenwart eines Katalysators stattfindet, der mindestens ein anorganisches hitzebeständiges Oxid, gegebenenfalls mindestens einen Zeolithen, mindestens ein Element, ausgewählt aus den Elementen der Gruppen VIB, VIIB, VIII und IB der Übergangsmetalle, gegebenenfalls mindestens ein Element, ausgewählt aus den Edelmetallen der Gruppe VIII, und gegebenenfalls mindestens ein Element, ausgewählt aus den Elementen der Gruppen IIA der Erdmetalle und IIIB der Seltenerden, umfasst.

19. Verfahren nach einem der Ansprüche 13 bis 16, bei dem das Material stromaufwärts eines Partikelfilters installiert wird, oder direkt auf die Wände, die einen Partikelfilter bilden, aufgetragen wird.

20. Verfahren nach einem der Ansprüche 13 bis 16, bei dem das Material in Abgasen aus Kraftfahrzeugverbrennungsmotoren verwendet wird.

21. Verfahren nach Anspruch 20, bei dem das Material in einem Dieselmotor oder einem Magergemisch-Benzinmotor verwendet wird.
